**Europäisches Patentamt**

**European Patent Office**

**Office européen des brevets**

(11) Veröffentlichungsnummer: **0 527 535 A2**

# EUROPÄISCHE PATENTANMELDUNG

(21) Anmeldenummer: **92202424.5**

(22) Anmeldetag: **06.08.92**

(51) Int. Cl.[5]: **G10L 5/06**, G10L 7/08

(30) Priorität: **14.08.91 DE 4126882**

(43) Veröffentlichungstag der Anmeldung:
**17.02.93 Patentblatt 93/07**

(84) Benannte Vertragsstaaten:
**DE FR GB**

(71) Anmelder: **Philips Patentverwaltung GmbH
Wendenstrasse 35 Postfach 10 51 49
W-2000 Hamburg 1(DE)**

(84) **DE**

(71) Anmelder: **N.V. Philips' Gloeilampenfabrieken
Groenewoudseweg 1
NL-5621 BA Eindhoven(NL)**

(84) **FR GB**

(72) Erfinder: **Hirsch, Hans-Günter, c/o Philips
Patentverwaltung
Wendenstrasse 35
W-2000 Hamburg 1(DE)**
Erfinder: **Rühl, Hans-Wilhelm, c/o Philips
Patentverwaltung
Wendenstrasse 35
W-2000 Hamburg 1(DE)**

(74) Vertreter: **Volmer, Georg et al
Philips Patentverwaltung GmbH
Wendenstrasse 35, Postfach 10 51 49
W-2000 Hamburg 1 (DE)**

(54) **Anordnung zur Sprachübertragung.**

(57) Die Erfindung betrifft eine Anordnung zur Sprachübertragung mit einem Sprachkodierer zur Kodierung eines in Zeitrahmen eingeteilten digitalen Sprachsignals mit Hilfe eines Satzes den einzelnen Zeitrahmen zugeordneten Kodierungsparametern. Solche Anordnungen sollen beispielsweise zur Übertragung von digitalen Sprachsignalen in dem zukünftigen paneuropäischen digitalen Mobilfunknetz eingesetzt werden. Bei einem Einbau eines solchen Mobilfunkgerätes in ein Fahrzeug ist es wünschenswert, für die Bedienung des Gerätes eine Sprachsteuerung vorzusehen, die eine Bedienung des Gerätes durch den Fahrer ermöglicht, ohne daß dieser eine oder beide Hände vom Lenkrad nehmen muß. Die Realisierung einer Sprachsteuerung für ein Mobilfunkgerät ist jedoch sehr aufwendig, da eine Analyse des vom Benutzer gesprochenen Sprachsignals vorgenommen werden muß.

Zur Reduzierung des zur Spracherkennung nötigen Aufwands wird deshalb vorgeschlagen, eine Auswerteschaltung zum Erhalten wenigstens eines Teiles des Satzes der Kodierungsparameter und zur Umsetzung der Kodierungsparameter in für eine Spracherkennung geeignete Erkennungsparameter vorzusehen.

EP 0 527 535 A2

FIG.1

Die Erfindung betrifft eine Anordnung zur Sprachübertragung mit einem Sprachkodierer zur Kodierung eines in Zeitrahmen eingeteilten digitalen Sprachsignals mit Hilfe eines Satzes den einzelnen Zeitrahmen zugeordneten Kodierungsparametern.

Anordnungen zur Übertragung von digitalen Sprachsignalen sollen in dem zukünftigen paneuropäischen digitalen Mobilfunknetz eingesetzt werden. Ein Beispiel für eine solche Anordnung ist in der Veröffentlichung "Architektur eines Mobilfunkgerätes für das Netz D" von P. Schöffel, W. Koch, W. Rosenkranz und J. Weith, Philips Innovation, Technische Mitteilungen Telekommunikation 1/1991, S. 132 bis 139 angegeben. Es wird dort der Aufbau und die Funktionsweise einer technischen Realisierung eines Mobilfunkgerätes für das neue digitale Mobilfunksystem (Netz-D) beschrieben. Neben dem Einsatz als tragbares Mobilfunkgerät (portables Telefon) sind die Geräte auch zum Einbau in Fahrzeugen (Autotelefon) geeignet.

Bei einem Einbau eines Mobilfunkgerätes in ein Fahrzeug ist es wünschenswert, für die Bedienung des Gerätes eine Sprachsteuerung vorzusehen, die eine Bedienung des Gerätes durch den Fahrer ermöglicht, ohne daß dieser eine oder beide Hände vom Lenkrad nehmen muß. Aus der Veröffentlichung "SPS51 - Eine universelle Schnittstelle für Freisprechen, Spracherkennung und Sprachspeicherung im Autotelefon" von H.-W. Rühl, G. Schlegel, E. Walters, PKI Technische Mitteilungen 1/1990, S. 27 bis 31 ist eine technische Realisierung einer Spracherkennungseinrichtung für ein Autotelefon bekannt. Die Spracherkennungseinrichtung ist als Zusatzgerät realisiert, welches über eine Schnittstelle mit dem Mobilfunkgerät verbunden wird. Das in dieser Spracherkennungseinheit verwendete Spracherkennungsverfahren ist in der Veröffentlichung "Verfahren für Freisprechen, Spracherkennung und Sprachkodierung in der SPS51" von W. Armbrüster, S. Dobler und P. Meyer, PKI Technische Mitteilungen 1/1990, S. 35 bis 41 beschrieben. Im einzelnen wird eine Signalanalyse vorgenommen, die eine Digitalisierung des Sprachsignals und eine nachfolgende Extraktion von informationstragenden Merkmalen, welche durch sogenannte Merkmalsvektoren repräsentiert werden, umfaßt. Die extrahierten Merkmals-vektoren werden mit den in einem Referenzspeicher abgeleg-ten, während einer Lernphase ermittelten Referenzmerkmals-vektoren in einer Erkennungseinheit verglichen. Die dabei gewonnenen Erkennungsergebnisse werden zur Erzeugung von Steuersignalen für das Mobilfunkgerät herangezogen. Die beschriebene Spracherkennungseinheit ist für den Einsatz in herkömmlichen, analogen Mobilfunkgeräten konzipiert und für einen Einsatz in Verbindung mit den neuen digitalen Mobilfunkgeräten nur bedingt geeignet.

Aufgabe der vorliegenden Erfindung ist es, eine Schaltungsanordnung der eingangs genannten Art so zu verbessern, daß mit möglichst geringem Aufwand eine Sprachsteuerung ermöglicht wird.

Die Aufgabe wird bei einer Anordnung der eingangs genannten Art dadurch gelöst, daß eine Auswerteschaltung zum Erhalten wenigstens eines Teiles des Satzes der Kodierungsparameter und zur Umsetzung der Kodierungsparameter in für eine Spracherkennung geeignete Erkennungsparameter vorgesehen ist.

Um bei einer Schaltungsanordnung zur Sprachübertragung eine für eine Übertragung akzeptable Datenrate zu erhalten, ist eine Sprachkodierung zur Datenreduktion nötig. Diese kann beispielsweise gemäß dem in den GSM-Recommendations 6.10 festgelegten Codec für das neue paneuropäische Mobilfunknetz erfolgen. Bei dieser GSM-Kodierung ist eine Analyse des digitalen Sprachsignals vorgesehen, bei der das Sprachsignal in Zeitrahmen von 20 ms Länge unterteilt und durch den einzelnen Zeitrahmen zugeordneten Sätzen von Kodierungsparametern repräsentiert wird. Die Erfindung schlägt vor, mittels einer Auswerteschaltung eine Umsetzung der Kodierungsparameter des GSM-Codecs in Erkennungsparameter, die für eine Spracherkennung geeignet sind, vorzunehmen. Hierdurch wird in vorteilhafter Weise eine zur Spracherkennung nötige Spektralanalyse eingespart und stattdessen lediglich eine Umsetzung der Kodierungsparameter in Erkennungsparameter benötigt. Die eigentliche Spektralanalyse wird bereits während der GSM-Kodierung des digitalen Sprachsignals vorgenommen, so daß eine nochmalige Sprachsignalanalyse zur Gewinnung von Erkennungsparametern zur Spracherkennung nicht mehr nötig ist. Dies bringt eine erhebliche Reduzierung des Schaltungs- und/oder des Rechenzeitaufwandes mit sich.

Es sei an dieser Stelle bemerkt, daß die Auswerteschaltung zur Umsetzung der Kodierungsparameter in Erkennungsparameter wahlweise durch einen Prozessor oder durch diskrete Bauelemente gebildet werden kann. Darüber hinaus können ein oder mehrere der in der Auswerteschaltung vorgesehenen Schritte wahlweise mit diskreten Bauelementen oder als Rechnerprogramm eines Prozessors realisiert werden.

In einer vorteilhaften Ausgestaltung ist zur Ermittlung von Erkennungsparametern in der Auswerteschaltung eine Umrechnung der in einem Satz der Kodierungsparameter enthaltenen LAR-Koeffizienten in Cepstralkoeffizienten vorgesehen. Die Cepstralkoeffizienten eignen sich hervorragend für eine Verwendung als Erkennungsparameter in der Spracherkennung und ermöglichen bereits gute Erkennungsergebnisse.

Eine weitere Ausgestaltung sieht in der Auswerteschaltung eine Bestimmung eines Stimmhaftigkeitsparameters durch Vergleich von in mehreren zeitlich aufeinanderfolgenden Sätzen der Kodierungsparameter enthaltenen Verstärkungsfaktoren (LTP-Gain) mit einem vorgebbaren Schwellwert, eine Veränderung eines zu Beginn der Vergleiche auf einem Anfangswert stehenden Zählerwertes, wenn der Wert eines Verstär-

3

kungsfaktors den Schwellwert überschreitet und eine Übernahme des Zählerwertes nach der Vergleichsbildung als Stimmhaftigkeitsparameter vor. Der Stimmhaftigkeitsparameter stellt ein Maß für die Stimmhaftigkeit eines Sprachrahmens (20 ms Länge) dar und ist als Erkennungsparameter in der Spracherkennung verwendbar. In Kombination mit den oben angegebenen Cepstralkoeffizienten können bei Verwendung beider Erkennungsparameter die erzielten Erkennungsergebnisse verbessert werden.

Durch eine in der Auswerteschaltung vorgesehene Berechnung von Spektralkomponenten durch Fouriertransformation mit anschließender Betragsbildung von Gruppen von zeitlich aufeinanderfolgenden Restsignalwerten eines Satzes der Kodierungsparameter und nachfolgender komponentenweiser Addierung der Werte der Betragsspektren der verschiedenen Gruppen, können in vorteilhafter Weise weitere für eine Spracherkennung geeignete Erkennungsparameter gewonnen werden. Die resultierenden Erkennungsparameter können wiederum allein oder in Verbindung mit den oben genannten Erkennungsparametern zur Spracherkennung verwendet werden, wobei bei einer gemeinsamen Verwendung die besten Erkennungsergebnisse zu erwarten sind.

Eine weitere Variante der Umsetzung von Kodierungs- in Erkennungsparameter ist eine Ausgestaltung, bei der in der Auswerteschaltung eine Bildung der Summe der Werte der in einem Satz der Kodierungsparameter enthaltenen Restsignal-Blockmaxima zur Ermittlung eines Restsignalenergieparameters vorgesehen ist. Dieser auf einfache Weise zu gewinnende Erkennungsparameter führt in Verbindung mit einem oder mehreren der oben beschriebenen Erkennungsparameter zu einer weiteren Verbesserung der Erkennungsergebnisse.

Weiterhin ist es vorteilhaft, in der Auswerteschaltung eine Zusammenfassung der ermittelten Erkennungsparameter zu einem Merkmalsvektor und eine Spracherkennung aus diesen Merkmalsvektoren vorzusehen. Hierdurch ist es möglich, in der Auswerteschaltung eine auf der Verwendung von Merkmalsvektoren basierende bekannte Spracherkennung zu realisieren. Das Prinzip einer solchen Spracherkennung ist z.B. in dem Buch "Automatische Spracheingabe und Sprachausgabe" von K. Sickert, Haar bei München, Verlag Markt und Technik, 1983, S. 223 bis 230 und 322 bis 326 beschrieben. Die beschriebene Spracherkennung beinhaltet im wesentlichen eine Spektralanalyse des digitalisierten Sprachsignals, um die informationstragenden Merkmale zu extrahieren. Diese Merkmale werden durch sogenannte Merkmalsvektoren repräsentiert, die mit den in einem Referenzspeicher abgelegten, während einer Lernphase ermittelten Referenz-Merkmalsvektoren verglichen werden. Gegenüber der in dieser Veröffentlichung beschriebenen Spracherkennung entfällt bei der Spracherkennung gemäß der Erfindung der Teil der (Spektral-)Analyse, da die zur Erkennung nötigen Merkmalsvektoren durch Umsetzung der bei der Sprachkodierung anfallenden Kodierungsparameter in Erkennungsparameter und anschließende Zusammenfassung der Erkennungsparameter zu Merkmalsvektoren gewonnen werden.

Im folgenden soll anhand des in Fig. 1 bis 6 schematisch dargestellten Ausführungsbeispiels die Erfindung näher erläutert und beschrieben werden. Es zeigen:

Fig. 1    ein Blockschaltbild einer Anordnung zur Sprachübertragung,

Fig. 2    ein Flußablaufdiagramm der Umsetzung der Kodierungsparameter in Erkennungsparameter sowie der nachfolgenden Spracherkennung,

Fig. 3    ein Flußablaufdiagramm der Umsetzung der LAR-Koeffizienten in Ceptralkoeffizienten,

Fig. 4    ein Flußablauflaufdiagramm der Bestimmung eines Stimmhaftigkeitsparameters,

Fig. 5    ein Flußablaufdiagramm der Berechnung von Spektralkomponenten,

Fig. 6    ein Flußablaufdiagramm der Ermittlung eines Restsignalenergieparameters.

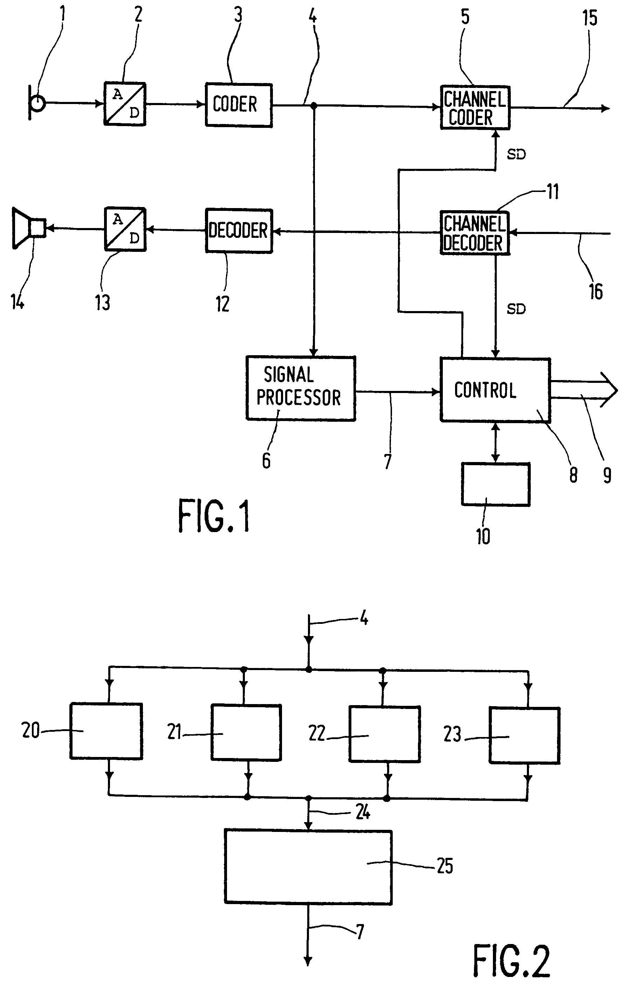

Fig. 1 zeigt einen Ausschnitt des Aufbaus einer Schaltungsanordnung zur Sprachübertragung. Ein über ein Mikrofon 1 aufgenommenes Sprachsignal wird einem A/D-Wandler 2 zugeführt. Im A/D-Wandler 2 wird das Sprachsignal zum Beispiel mit einer Frequenz von 8 kHz digitalisiert und anschließend einem Sprachkodierer 3 zugeführt. Mit Hilfe des Sprachkodierers 3 wird das digitale Sprachsignal kodiert. Die Kodierung erfolgt dabei nach einem PPE-LTP-Verfahren (Regular Pulse Excitation - Long Term Prediction), wie es in den GSM-Recommendation 6.10 als Standard-Kodierverfahren für das zukünftige paneuropäische Mobilfunksystem vorgesehen ist.

Einen Überblick über das GSM-Kodierungsverfahren und die daraus resultierenden Kodierungsparameter geben z.B. die Veröffentlichung "Sprachcodec für das digitale europäische Mobilfunknetz" von K. Hellwig, PKI Nürnberg, Vortrag gehalten im Rahmen des Lehrgangs Nr. 12579/73.260 "GSM - Das digitale Mobilfunknetz für ganz Europa", an der Technischen Akademie Eßlingen Weiterbildungszentrum, 25./26. April 1990, S. 4 bis 14 sowie die Veröffentlichung "Speech Codec for the European Mobile Radio System" von P. Vary et al., International Conference on Acoustics, Speech and Signal Processing, ICASSP-1988, Seiten 227-230.

Wie in diesen Veröffentlichungen beschrieben, wird das digitalisierte Sprachsignal bei einer GSM-Kodierung in Zeitrahmen von jeweils 20 ms Länge eingeteilt und anschließend jeder Zeitrahmen einer LPC-Analyse (LPC = Linear Predictive Coding), einer LTP-Analyse (LTP = Long Term Prediction) sowie einer RPE-Kodierung (RPE = Regular Pulse Excitation) unterworfen. Es resultiert für jeden Zeitrahmen ein Satz von Kodierungsparametern, der sich aus folgenden jeweils aus den verschiedenen Analyse- und Kodierungsverfahren resultierenden Kodierungsparametern 4 zusammensetzt (vgl. Seite 12 der oben genannten Veröffentlichung "GSM-Das digitale Mobilfunknetz für ganz Europa"):

| Parameter | | Bedeutung | Bitanzahl | Bitrate |
|---|---|---|---|---|
| LAR(i) | i = 1..8 | LPC-Parameter | 36 | 1.8 kBit/s |
| N(j) | j = 1..4 | LTP-Delay | 28 | 1.4 kBit/s |
| b(j) | j = 1..4 | LTP-Gain | 8 | 0.4 kBit/s |
| M(j) | j = 1..4 | RPE-Grid | 8 | 0.4 kBit/s |
| $X_M(j)$ | j = 1..4 | RPE-Blockmaximum | 24 | 1.2 kBit/s |
| e(j,l) | j = 1..4<br>1 = 0..12 | RPE-Pulse | 156 | 7.8 kBit/s |
| Summe | | | 260 | 13.0 kBit/s |

Im einzelnen bezeichnet LAR(i) eines von insgesamt acht durch die LPC-Analyse gewonnenen logarithmischen Flächenverhältnissen (LAR = Logarithmic Area Ratio) mit dem Index i (i = 1,...,8).

Aus der LTP-Analyse der GSM-Kodierung resultieren die Kodierungsparamater N(j) und b(j), wobei N(j) den Index des Maximums einer Kreuzkorrelation (LTP-Delay) und b(j) einen Verstärkungsfaktor (LTP-Gain) jeweils eines Subsegments von 5ms Länge eines Sprachrahmens bezeichnet. Der Index j bestimmt eines von vier Subsegmenten (j = 1,...,4) innerhalb eines Sprachrahmens.

Die RPE-Kodierung liefert die Kodierungsparameter M(j), $X_M(j)$ und e(i,j). Die Parameter werden wieder für eines von vier (j = 1,...,4) Subsegmenten bestimmt. Dabei enthält ein Subsegment jeweils 13 Restsignalwerte e(i,j) wobei i den Index eines Restsignalwertes innerhalb eines j-ten Subsegments bezeichnet. Im weiteren wird diese Folge von 13*4 = 52 Restsignalwerten zur Vereinfachung mit e(k) bezeichnet (k = Index). M(j) bezeichnet den Index (RPE-Grid) der Teilfolge von 13 Restsignalwerten e(k), die die größte Energie innerhalb eines Sprachrahmens aufweist. Von der durch M(j) bezeichneten Folge ist zudem jeweils das Blockmaximum $X_M(j)$ als weiterer Parameter eines j-ten Subsegments in den GSM-Kodierungsparameter enthalten.

Wie aus der Tabelle ersichtlich ist, kann die zur Übertragung benötigte Datenbitrate durch die GSM-Kodierung erheblich, d.h. auf 13 kBit/s gesenkt werden. Die vom Sprachkodierer 3 gewonnenen, das Sprachsignal beschreiben-den Kodierungsparameter 4 werden anschließend an einen Kanalkodierer 5 übergeben, der den Kodierungsparametern 4 Redundanz zufügt, um eine sichere Übertragung über den Funkkanal zu gewährleisten. Die mit Redundanz versehenen Kodierungsparameter werden vom Kanalkodierer zu einem Sender übertragen.

Die vom Sprachkodierer 5 bestimmten Kodierungsparameter 4 werden zudem einer Auswerteschaltung 6 zugeführt. Die Auswerteschaltung 6, die im Ausführungsbeispiel als Signalprozessor mit einem Speicher realisiert ist, ist für eine Umsetzung der Kodierungsparameter 4 in für eine Spracherkennung geeignete Erkennungsparameter und für eine auf den ermittelten Erkennungsparametern basierende Spracherkennung eingerichtet. Mit Hilfe der Spracherkennung erzeugt die Auswerteschaltung 6 ein Erkennungssignal 7, welches in einem geeigneten Datenformat die Erkennungsergebnisse der Spracherkennung enthält. Das Erkennungssignal 7 wird an eine Gerätesteuerung 8 übermittelt, die ausgehend vom Erkennungssignal 7 Steuersignale 9 für die Funktionssteuerung des Mobilfunkempfängers generiert. Der Aufbau einer solchen Gerätesteuerung ist z.B. in der Veröffentlichung "Architektur eines Mobilfunkgerätes für das Netz D" von P. Schöffel, W. Koch, W. Rosenkranz und J. Weith, Philips Innovation, Technische Mitteilungen Telekommunikation 1/1991, S. 132 bis 139 beschrieben. Ebenso sind in dieser Veröffentlichung die Verbindungen der Gerätesteuerung mit weiteren Teilen des Mobilfunkgerätes wie z.B. mit einem Bedienteil 10, das u.a. eine Anzeige, einen Chipkartenleser sowie eine Tastatur enthält oder mit dem Kanalkodierer 5 zur Übermittlung von Signalisierungsdaten (SD) beschrieben, so daß hier nicht weiter darauf eingegangen werden soll. Als weitere Bestandteile enthält der Mobilfunkempfänger einen Kanaldekodierer 11, der die vom Empfänger gelieferten Signale kanaldekodiert und dadurch die GSM-Kodierungsparameter ermittelt. Aus diesen Kodierungsparametern - sie sind selbstverständlich exakt gleich aufgebaut wie die Kodierungsparameter 4 - kann mit einem Sprachdekodierer 12 ein digitales Sprachsignal rekonstruiert werden, welches in einem Analog-Digital-Umsetzer 13 in ein analoges Sprachsignal umgesetzt und über einen Lautsprecher 14 ausgegeben werden kann.

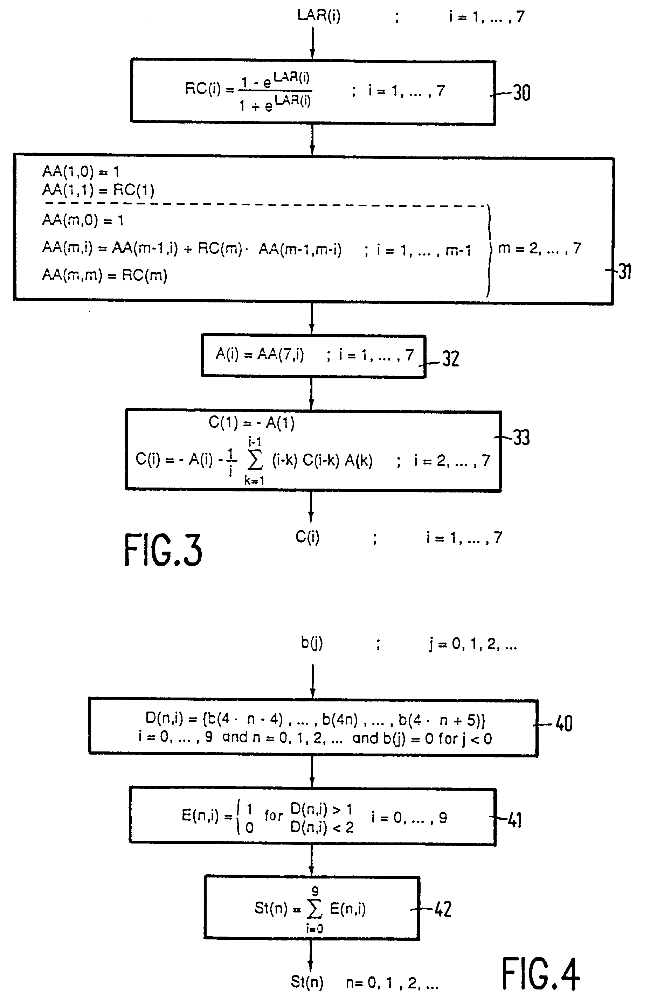

Fig. 2 verdeutlicht anhand eines Flußdiagramms die in der Auswerteschaltung 6 vorgesehenen Schritte zur Erzeugung des Erkennungssignals 7. Dabei sind gleiche Teile mit gleichen Bezugszeichen versehen. Die Auswerteschaltung 6 wird im Ausführungsbeispiel durch einen Signalprozessor mit einem Speicher gebildet, der entsprechend den Flußablaufdiagrammen von Fig. 3 bis Fig. 6 programmiert ist. Die Kodierungsparameter 4 werden über eine Verzweigung insgesamt vier Verarbeitungsblöcken zugeführt, durch die aus den Kodierungsparametern 4 jeweils verschiedene für eine Spracherkennung geeignete Erkennungsparameter gewonnen werden. Die in den verschiedenen Blöcken gewonnen Parameter sind:

- Cepstralkoeffizienten durch Umrechnung von logarithmischen Flächenverhältnissen (Block 20)
- ein Stimmhaftigkeitsparameter (Block 21) aus den Verstärkungsfaktoren (LTP-Gain)
- Spektralkomponenten (Block 22) aus den Restsignalwerten
- Restsignalenergieparameter (Block 23) aus den Restsignal-Blockmaxima (RPE-Grid)

Die in den Blöcken bestimmten Erkennungsparameter werden für jeden Sprachrahmen von 20ms Länge ermittelt und zu einem Merkmalsvektor 24 zusammengefaßt. Der Merkmalsvektor 24, der somit alle 20ms neu berechnet wird, bildet die Grundlage für die nachfolgenden Schritte und wird einer Spracherkennungeinheit 25 zugeführt. In der Spracherkennungseinheit 25 wird unter Verwendung der Merkmalsvektoren 24 eine Spracherkennung durchgeführt, wie sie z.B. in der Veröffentlichung "Verfahren für Freisprechen, Spracherkennung und Sprachkodierung in der SPS51" von W. Armbrüster, S. Dobler und P. Meyer, PKI Technische Mitteilungen 1/1990, S. 35 bis 41 beschrieben ist. Hierdurch kann das Erkennungssignal 7 erzeugt werden, das wie bereits erwähnt, die Erkennungsergebnisse in einem zur Weitergabe und Weiterverarbeitung in der Gerätesteuerung 8 geeigneten Datenformat enthält.

Anhand der in den nachfolgenden Figuren 3 bis 6 gezeigten Flußablaufdiagramme sollen die in den Blöcken 20 bis 23 vorgenommenen Schritte zur Umsetzung der Kodierungsparameter 4 in Erkennungsparameter 7 detailliert erläutert werden.

Fig. 3 zeigt dazu das Flußablaufdiagramm von Block 20, in dem die Umrechnung der in den Kodierungsparametern enthaltenen logarithmischen Flächenverhältnisse in Cepstralkoeffizienten vorgenommen wird. Die Umrechnung erfolgt durch ein z.B. aus der Veröffentlichung "Programs for Digital Signal Processing" (Edited by Digital Signal Processing, Committee of the IEEE Acoustics, Speech and Signal Processing Society), IEEE Press 1979, Abschnitt 4.3-2 bis 4.3-3, bekanntes Umrechnungsverfahren. Aus den Kodierungsparametern 4 werden die logarithmischen Flächenkoeffizienten LAR(i) mit dem Index $i = 1,...,7$ entnommen und gemäß der Vorschrift (Block 30)

$$RC(i) = \frac{1 - e^{LAR(i)}}{1 + e^{LAR(i)}}$$

in Reflexionskoeffizienten RC(i) mit $i = 1,...,7$ umgerechnet. Die Reflexionskoeffizienten werden zur Bestimmung einer Hilfsmatrix AA (zweidimensionales Feld) gemäß der folgenden rekursiven Vorschrift (Block 31)

```
AA(1,0)  =  1
AA(1,1)  =  RC(1)
-----------------------------------------------------
AA(m,0)  =  1                                          |
AA(m,i)  =  AA(m-1,i) +                                |  m=2,...,7
            RC(m) · AA(m-1,m-i)   ;i=1,...,m-1         |
AA(m,m)  =  RC(m)                                      |
-----------------------------------------------------
```

herangezogen, wobei für den Index $m = 2,...,7$ und für den Index $i = 1,...,m-1$ gilt. Aus der Hilfsmatrix AA werden die Elemente AA(7,i) mit $i = 1,...,7$ ausgewählt und den Hilfsvariablen A(i) gemäß

A(i)  =  AA(7,i) ; $i = 1,...,7$

zugewiesen (Block 32). Mit Hilfe der Hilfsvariablen A(i) können durch Anwendung der Vorschrift (Block 33)

$$C(1) = -A(1)$$

$$C(i) = -A(i) - \frac{1}{i} \sum_{k=1}^{i-1} (i-k)\, C(i-k)\, A(k) \qquad ; i=2,\ldots,7$$

direkt die Cepstralkoeffizienten C(i) mit i = 1,...,7 errechnet werden. Der Index k läuft dabei von k = 1 bis i-1. Die Cepstralkoeffizienten werden als Erkennungsparameter in den Merkmalsvektor 24 übernommen und zur Spracherkennung herangezogen.

Fig. 4 zeigt die Bestimmung eines Stimmhaftigkeitsparameters (vgl. Block 21, Fig.2) aus den in den Kodierungsparametern 4 enthaltenen Verstärkungsfaktoren b(j), wobei der Index j ein Subsegment (5ms Länge) eines Sprachrahmens bezeichnet. Die alle 5ms gebildeten Verstärkungsfaktoren b(j) werden über einen Zeitraum von 50ms - dies entspricht 10 aufeinanderfolgenden Werten von b(j) - betrachtet. Dazu erfolgt die Abspeicherung der in diesem Zeitraum auftretenden Werte b(j) in einem Hilfsfeld D(n,i), wobei n der Index des jeweiligen Sprachrahmens ist, für den der Stimmhaftigkeitsparameter berechnet werden soll. Der Index i ist der Laufindex des i-ten in D(n,i) abgelegten Wertes von b(j), wobei i = 0,...,9 gilt (10 Werte werden betrachtet). Die Zwischenspeicherung der Werte von b(j) kann somit nach der Vorschrift (Block 40):

$$D(n,i) = \{\ b(4{}^{\bullet}n - 4),...,b(4n),...,b(4{}^{\bullet}n + 5)\ \}$$
mit i = 0,...,9 ; n = 0,1,2,... und b(j) = 0 für j < 0

dargestellt werden. Sind zu Beginn der Verarbeitung noch keine Werte von b(j) aus der Vergangenheit (j < 0) verfügbar, so werden die Werte von b(j) hierfür mit dem Wert Null angenommen. Die 10 in D(n,i) abgelegten Werte von b(j) werden jeweils einem Schwellwertvergleich mit dem Schwellwert 2 (dezimal) unterzogen. Ist der abgelegte Wert größer oder gleich dem Schwellwert, so wird ein Element eines aus 10 Elementen (i = 0,...,9) bestehenden Hilfsfeldes E(n,i) auf den Wert Eins gesetzt. Liegt der Wert unter der Schwelle, so wird das Element auf den Wert Null gesetzt. Die Schwellwertoperationen erfolgen also gemäß Block 41:

$$E(n,i) = \begin{cases} 1 & \text{für } D(n,i) > 1 \\ 0 & \text{für } D(n,i) < 2 \end{cases} \qquad \text{mit } i=0,\ldots,9$$

Nach Beendigung der 10 Vergleiche werden die Werte der 10 Elemente (i = 0,...,9) von E(n,i) gemäß Block 42 aufsummiert und der resultiernde Summenwert als Stimmhaf

$$St(n) = \sum_{i=0}^{9} E(n,i)$$

tigkeitsparameter St(n) eines Sprachrahmens mit dem Index n herangezogen und in den Merkmalsvektor aufgenommen. Es sei hier erwähnt, daß die Ermittlung des Stimmhaftigkeitsparameters St(n) auch ohne das Hilfsfeld E(n,i) erfolgen kann, indem ein zu Beginn der 10 Vergleiche auf Null stehender Zählerwert um eins erhöht wird, wenn ein in D(n,i) abgelegter Wert den Schwellwert überschreitet. Andernfalls bleibt der Zählerwert unverändert. Der nach Beendigung der 10 Vergleiche resultierende Zählerwert kann direkt als Stimmhaftigkeitsparameter St(n) in den Merkmalsvektor 24 übernommen werden.

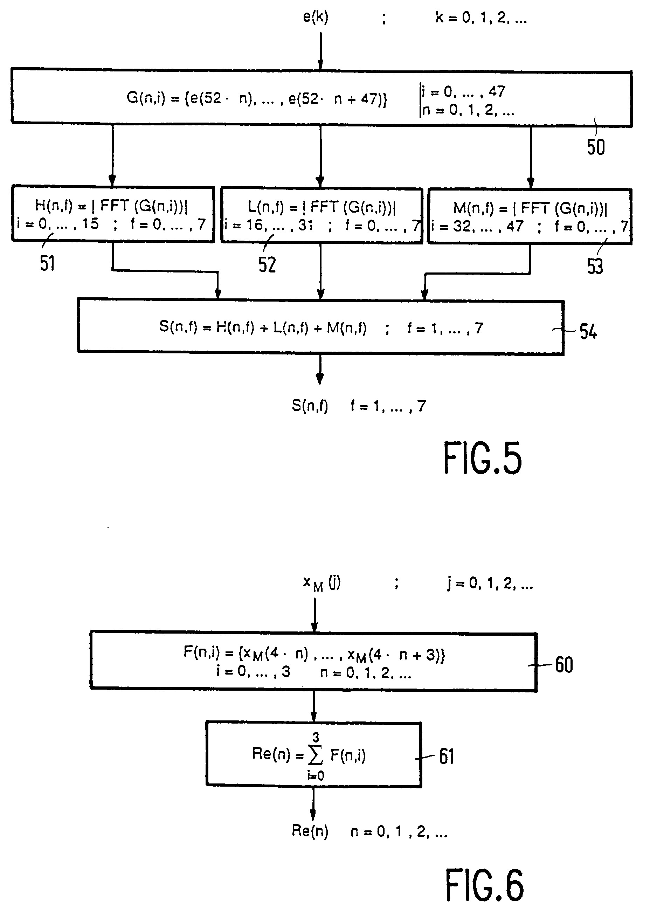

Das Flußablaufdiagramm in Fig. 5 zeigt die Ermittlung von Spektralkomponenten aus den Restsignalwerten der Kodierungsparameter. Hierbei wird für jeden Sprachrahmen n die in den Kodierungsparametern 4 enthaltene Folge e(k) von 52 Restsignalwerten betrachtet. Die ersten 48 der 52 in e(k) enthaltenen Restsignalwerte werden in einem Hilfsfeld G(n,i) gemäß der Vorschrift

$$G(n,i) = \{e(52 \cdot n),\ldots,e(52 \cdot n + 47)\} \qquad \begin{array}{l} i=0,\ldots,47 \\ n=0,1,2,\ldots \end{array}$$

abgelegt, wobei n der Index des betrachteten Sprachrahmens und i der Index eines der 48 abgelegten Restsignalwerte ist (i = 0,...,47). Die in G(n,i) abgelegten Werte werden anschließend in 3 Gruppen eingeteilt. Gruppe 1 sind die Werte G(n,i) mit i = 0,. . ,15, Gruppe 2 die Werte G(n,i) mit 1 = 16,...,31 und Gruppe 3 die Werte G(n,i) mit i = 32,...,47. Die Gruppen werden getrennt einer schnellen Fouriertransformation mit anschließender Betragsbildung gemäß den Vorschriften (Blöcke 51 bis 53)

$$H(n,f) = |\ FFT(\ G(n,i)\ )\ | \ ; \ i = 0,\ldots,15 \ ; \ f = 0,\ldots,7$$
$$L(n,f) = |\ FFT(\ G(n,i)\ )\ | \ ; \ i = 16,\ldots,31 \ ; \ f = 0,\ldots,7$$
$$M(n,f) = |\ FFT(\ G(n,i)\ )\ | \ ; \ i = 32,\ldots,47 \ ; \ f = 0,\ldots,7$$

unterworfen, wobei die resultiernden Spektralwerte der Gruppe 1 in einem Hilfsfeld H(n,f), von Gruppe 2 in einem Hilfsfeld L(n,f) und die die Spektralwerte von Gruppe 3 in einem Hilfsfeld M(n,f) abgelegt werden. Von dem aus der schnellen Transformation mit nachfolgender Betragsbildung resultierenden Spektrum werden dabei jedoch lediglich 8 Teilbänder betrachtet, die mit den Index f = 0....,7 bezeichnet werden, wobei der Gleichanteil des Spektrums den Index f = 0 erhält.

Zur Ermittlung von für eine Spracherkennung geeigneten Erkennungsparametern wird für jeden Index f = 1,...,7 die Summe über die in den Hilfsfeldern H(n,f),L(n,f) und M(n,f) abgelegten Spektralwerten gemäß der Vorschrift

$$S(n,f) = H(N,f) + L(n,f) + M(n,f) \ ; \ f = 1,\ldots,7$$

gebildet und in dem Spektralwertfeld S(n,f) abgelegt. Der Gleichanteil (Spektralwert mit Index f = 0) bleibt hierbei unberücksichtigt, da er keine in einer Spracherkennung verwertbare Information enthält. Die in S(n,f) enthaltenen Spektralwerte werden in den Merkmalsvektor 24 aufgenommen.

In Fig. 6 ist die Gewinnung eines weiteren Erkennungsparameters durch Bildung der Summe der Werte der der Blockmaxima $X_M(j)$ eines Sprachrahmens n. Wie bereits erwähnt, enthält jeder Sprachrahmen n vier Subsegmente für die jeweils der Wert des Blockmaximums in den Kodierungsparametern 4 enthalten ist. Diese vier Werte der Blockmaxima $X_M(j)$ werden gemäß

$$F(n,i) = \{X_M(4 \bullet n),\ldots,X_M(4 \bullet n + 3)\}$$

in einem Hilfsfeld F(n,i) abgelegt, wobei i ein Laufindex (i = 0,...,3) und n wiederum einen Sprachrahmen bezeichnet. Die vier im Hilfsfeld abgelegten Werte werden gemäß

$$Re(n) = \sum_{i=0}^{3} F(n,i)$$

aufsummiert und der dabei gewonnene Restsignalparameter Re(n) des Sprachrahmens n in den Merkmalsvektor 24 aufgenommen.

Es sei hier nochmals darauf hingewiesen, daß die im Merkmalsvektor 24 abgelegten Erkennungsparameter jederzeit zur weiteren Verbesserung der Ergebnisse der nachfolgenden Spracherkennung durch weitere geeignete Paramter ergänzt werden können. Andererseits ist es selbstverständlich möglich, einen oder mehrere der oben beschriebenen Erkennungsparameter unter eventueller Verschlechterung der Erkennungsergebnisse wegzulassen.

**Patentansprüche**

1. Anordnung zur Sprachübertragung mit einem Sprachkodierer (3) zur Kodierung eines in Zeitrahmen eingeteilten digitalen Sprachsignals mit Hilfe eines Satzes den einzelnen Zeitrahmen zugeordneten Kodierungsparametern (4),

dadurch gekennzeichet,
daß eine Auswerteschaltung (6) zum Erhalten wenigstens eines Teiles des Satzes der Kodierungsparameter (4) und zur Umsetzung der Kodierungsparameter (4) in für eine Spracherkennung geeignete Erkennungsparameter vorgesehen ist.

2. Anordnung zur Sprachübertragung nach Anspruch 1,
dadurch gekennzeichnet,
daß der Sprachkodierer (3) zur GSM-Kodierung des in Zeitrahmen eingeteilten digitalen Sprachsignals vorgesehen ist.

3. Anordnung zur Sprachübertragung nach Anspruch 1 oder 2,
dadurch gekennzeichnet,
daß in der Auswerteschaltung (6) eine Umrechnung der in einem Satz der Kodierungsparameter (4) enthaltenen LAR-Koeffizienten in Cepstralkoeffizienten vorgesehen ist.

4. Anordnung zur Sprachübertragung nach einem der vorhergehenden Ansprüche,
dadurch gekennzeichnet, daß in der Auswerteschaltung (6)
   - eine Bestimmung eines Stimmhaftigkeitsparameters durch Vergleich von in mehreren zeitlich aufeinanderfolgenden Sätzen der Kodierungsparameter (4) enthaltenen Verstärkungsfaktoren (LTP-Gain) mit einem vorgebbaren Schwellwert,
   - eine Veränderung eines zu Beginn der Vergleiche auf einem Anfangswert stehenden Zählerwertes, wenn der Wert eines Verstärkungsfaktors den Schwellwert überschreitet und
   - eine Übernahme des Zählerwertes nach der Vergleichsbildung als Stimmhaftigkeitsparameter vorgesehen ist.

5. Anordnung zur Sprachübertragung nach einem der vorhergehenden Ansprüche,
dadurch gekennzeichnet, daß in der Auswerteschaltung (6) eine Berechnung von Spektralkomponenten durch Fourier-Transformation mit anschließender Betragsbildung von Gruppen von zeitlich aufeinanderfolgenden Restsignalwerten eines Satzes der Kodierungsparameter (4) und nachfolgender komponentenweiser Addierung der Werte der Betragsspektren der verschiedenen Gruppen vorgesehen ist.

6. Anordnung zur Sprachübertragung nach einem der vorhergehenden Ansprüche,
dadurch gekennzeichnet, daß in der Auswerteschaltung (6) eine Bildung der Summe der Werte der in einem Satz der Kodierungsparameter (4) enthaltenen Restsignal-Blockmaxima zur Ermittlung eines Restsignalenergieparameters vorgesehen ist.

7. Anordnung zur Sprachübertragung nach einem der vorhergehenden Ansprüche,
dadurch gekennzeichnet,
daß in der Auswerteschaltung (6) eine Zusammenfassung der ermittelten Erkennungsparameter zu einem Merkmalsvektor (24) und eine Spracherkennung aus diesen Merkmalsvektoren (24) vorgesehen ist.

FIG.1

FIG.2

$$LAR(i) \quad ; \quad i = 1, \dots, 7$$

$$RC(i) = \frac{1 - e^{LAR(i)}}{1 + e^{LAR(i)}} \quad ; \quad i = 1, \dots, 7 \qquad 30$$

$$AA(1,0) = 1$$
$$AA(1,1) = RC(1)$$
$$AA(m,0) = 1$$
$$AA(m,i) = AA(m-1,i) + RC(m) \cdot AA(m-1,m-i) \quad ; \quad i = 1, \dots, m-1 \quad \left.\right\} m = 2, \dots, 7$$
$$AA(m,m) = RC(m)$$
31

$$A(i) = AA(7,i) \quad ; \quad i = 1, \dots, 7 \qquad 32$$

$$C(1) = -A(1)$$
$$C(i) = -A(i) - \frac{1}{i} \sum_{k=1}^{i-1} (i-k) \, C(i-k) \, A(k) \quad ; \quad i = 2, \dots, 7$$
33

$$C(i) \quad ; \quad i = 1, \dots, 7$$

# FIG.3

$$b(j) \quad ; \quad j = 0, 1, 2, \dots$$

$$D(n,i) = \{b(4 \cdot n - 4), \dots, b(4n), \dots, b(4 \cdot n + 5)\}$$
$$i = 0, \dots, 9 \text{ and } n = 0, 1, 2, \dots \text{ and } b(j) = 0 \text{ for } j < 0 \qquad 40$$

$$E(n,i) = \begin{cases} 1 & \text{for } D(n,i) > 1 \\ 0 & D(n,i) < 2 \end{cases} \quad i = 0, \dots, 9 \qquad 41$$

$$St(n) = \sum_{i=0}^{9} E(n,i) \qquad 42$$

$$St(n) \quad n = 0, 1, 2, \dots$$

# FIG.4

e(k)        ;        k = 0, 1, 2, ...

$$G(n,i) = \{e(52 \cdot n), \dots , e(52 \cdot n + 47)\} \quad \begin{vmatrix} i = 0, \dots , 47 \\ n = 0, 1, 2, \dots \end{vmatrix}$$

50

$$H(n,f) = |\ FFT\ (G(n,i))| \\ i = 0, \dots , 15 \ ; \ f = 0, \dots , 7$$

51

$$L(n,f) = |\ FFT\ (G(n,i))| \\ i = 16, \dots , 31 \ ; \ f = 0, \dots , 7$$

52

$$M(n,f) = |\ FFT\ (G(n,i))| \\ i = 32, \dots , 47 \ ; \ f = 0, \dots , 7$$

53

$$S(n,f) = H(n,f) + L(n,f) + M(n,f) \quad ; \quad f = 1, \dots , 7$$

54

$$S(n,f) \quad f = 1, \dots , 7$$

# FIG.5

$x_M (j)$        ;        j = 0, 1, 2, ...

$$F(n,i) = \{x_M(4 \cdot n) , \dots , x_M(4 \cdot n + 3)\} \\ i = 0, \dots , 3 \quad n = 0, 1, 2, \dots$$

60

$$Re(n) = \sum_{i=0}^{3} F(n,i)$$

61

$$Re(n) \quad n = 0, 1 , 2, \dots$$

# FIG.6

12